Europäisches Patentamt

(19) European Patent Office

Office européen des brevets

(11) Publication number: **0 276 932**
**A2**

(12) **EUROPEAN PATENT APPLICATION**

(21) Application number: **88300326.1**

(22) Date of filing: **15.01.88**

(51) Int. Cl.⁴: **H 04 B 7/185**

(30) Priority: **29.01.87 US 8306**

(43) Date of publication of application:
**03.08.88 Bulletin 88/31**

(84) Designated Contracting States:
**AT BE CH DE ES FR GB GR IT LI LU NL SE**

�"Applicant: **NORSAT INTERNATIONAL INC.**
**302-12886 78th Avenue**
**Surrey British Columbia V32 8E7  (CA)**

(72) Inventor: **Filmer, Donald Douglas**
**2970 East 27th Avenue**
**Vancouver, B.C. V5R 1N8  (CA)**

(74) Representative: **Arthur, Bryan Edward et al**
**Withers & Rogers 4 Dyer's Buildings Holborn**
**London EC1N 2JT  (GB)**

(54) **Satellite receiver computer card.**

(57) This invention relates to a novel satellite receiver module which is useful for receiving signals from a satellite, using a computer for control of the signal. The receiver module has a circuit which is adapted to process signals from the satellite and to cooperate with a computer, and a power adapter for enabling the circuit to be powered by power received from the computer.

EP 0 276 932 A2

Bundesdruckerei Berlin

Description

SATELLITE RECEIVER COMPUTER CARD

FIELD OF THE INVENTION

This invention relates to a novel satellite receiver module which is useful for receiving signals from a satellite, using a computer for control.

BACKGROUND OF THE INVENTION

In the 1980's, there has been a tremendous increase in the number of residences in industrialized countries that are equipped with communication satellite receiving antenna and computers (microprocessors). Currently, there is no mechanism available which enables a computer to relate to and communicate with a communication satellite. Satellites are typically analog based while computers operate digitally. An apparatus that could enable a home computer to receive and transmit signals from and to a satellite would permit the two systems to inter cooperate in many advantageous ways.

The applicant is aware of the following references which are more or less relevant to this invention:

| U.S. Patent No. | Inventor |
| --- | --- |
| 4,360,827 | Braun |
| 4,109,202 | Kudsia |
| 3,986,120 | Edstrom |
| 4,273,962 | Wolfe |
| 3,931,623 | Sones |
| 4,538,175 | Balbes |

These references pertain to satellite communication systems.

SUMMARY OF THE INVENTION

The invention pertains to a satellite receiver module for receiving signals from a satellite using a computer (microprocessor) for control and processing of the signals. The apparatus is constructed in the form of a printed circuit board which is sufficiently small to fit inside a computer in one or two of the accessory slots. The receiver module receives its power via the computer. The operating frequency and characteristics of the receiver module can be controlled by either the computer or by signals received from the satellite.

The invention pertains to a satellite receiver module for receiving a signal from a satellite using a computer for control of the signal comprising:

(a) circuit means which is adapted to process signals from the satellite and to cooperate with a computer; and

(b) means for enabling the circuit means to be powered by power received through the computer.

The circuit means may include means for controlling the circuit means by signals received from the computer or from the satellite. The signal from the satellite may be received by means of a reflector antenna. A signal from the reflector antenna may be relayed through a low noise block converter and converted to an intermediate frequency signal before being transmitted to the circuit means.

In the receiver module, the circuit means may include an RF section for demodulating the intermediate frequency from the antenna into a baseband signal. The receiver module may include means wherein the baseband signal is segregated into video, audio and data signals. The circuit means may include means for controlling the position of the receiving antenna.

The receiver module may include on-board microprocessing means for processing data received from the computer or from the signal received from the satellite and configure the circuit means as required by the user of the receiver module. The receiver module may include outputs means for video, audio and data. The video output means may include means for driving a television monitor or recording equipment of transmitted video information. The audio output means may include means to drive an audio amplifier or recording equipment utilizing the signal received from the satellite. The data output means may include means to drive a printer, computer or a data storage device utilizing the signal received from the satellite.

The receiver module may include circuit means which can extract a signal from the video synchronization signal. The micro-processing means can utilize a signal extracted from the video synchronization signal, and data from a subcarrier transmission and use such signals as control signals, or relay them to the computer as data for processing. The receiver module may include an on-board power supply which is adapted for modifying power from the computer so that it can be used by the receiver module.

DRAWINGS

In the drawings, which illustrate a specific embodiment of the invention and which are not to be regarded as restricting the scope of the invention in any way:

Figure 1 represents a schematic diagram of the satellite receiving system;

Figure 2 represents a perspective view of the satellite receiver module; and

Figure 3 represents a schematic block diagram of the satellite receiver components.

DETAILED DESCRIPTION OF A SPECIFIC EMBODIMENT OF THE INVENTION

The invention can be described in general terms as follows. A signal transmitted by a communication satellite in orbit around the earth is captured by an antenna on the ground, for instance in the back yard or on the roof of residences in which a computer is located. This signal is then amplified by a low noise block downconverter and converted to an intermediate frequency for transmission along a coaxial cable to a receiver module located inside the computer.

The satellite receiver module includes an R.F. section for demodulating the intermediate frequency received along the coaxial cable from the antenna and producing therefrom a baseband signal. This baseband signal is then broken down into video, audio and data signals by various amplifiers and demodulators which are under the control of the computer (microprocessor).

The receiver module can be controlled by the computer and/or the signal received from the satellite. The receiver module also has the facility to communicate to an up-link to a satellite by means of telephone modems. The receiver module has the capability to automatically control the position of the receiving antenna(s). Thus, it can identify and control the specific satellite from which the receiver module will receive its signal.

The receiver module includes an on-board microprocessor which can process data received from the computer or from the signal received from the satellite to configure the receiver module as desired by the user. The receiver module has outputs for video, audio and data. The video output can be used to drive television monitors or transmit video information from recording equipment. The audio outputs conveying the received satellite signals can be used to drive audio amplifiers or recording equipment. The data outputs carrying the received satellite signals can be used to drive printers, computers or storage devices.

The receiver module includes circuits which can extract signals from the video synchronization signals as well as data from subcarrier transmissions. The on-board microprocessor can then use these signals as control signals or pass them to the computer as data for processing. The receiver module also has an onboard power supply that modifies the computer's power supply output so that it is usable by the receiver module.

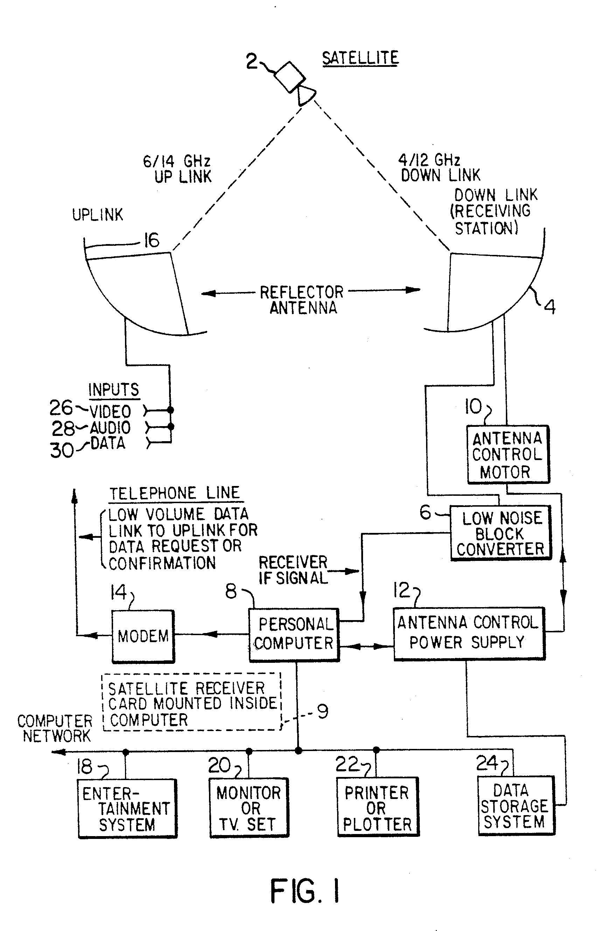

Referring now to the drawings, Figure 1 depicts a schematic diagram of the overall satellite receiving and transmitting system. A signal is transmitted from a satellite 2 to the reflector antenna of a downlink receiving station 4. This signal which is typically 4/12 GHz, is then amplified by a low noise block down converter 6, where it is converted to an intermediate frequency for transmission via a coaxial cable to a satellite receiver card 9 mounted inside a computer 8. The satellite receiver card 9 is controlled by the computer 8 and/or the signal received from the satellite 2. The receiver card 9 can automatically control the receiving antenna position by means of an antenna controlled power supply 12 which operates antenna control motor 10. Thus, it is possible to target the specific satellite 2 in space from which the receiver card 9 will receive its signal. The receiver card 9 has an R.F. system which demodulates the intermediate frequency signal into a baseband signal. The satellite receiver card 9 has circuitry to segregate the baseband signal into respective video, audio and data signals and outputs for the video, audio and data signals. These respective outputs control a home or commercial entertainment system 18, a television monitor or television set 20, printer or plotter 22, and a data storage system 24.

The receiver card 9 is capable of communicating by means of a telephone modem 14 and a low volume data telephone for date request or confirmation to an up-link reflector antenna 16, which in turn is capable of communicating with the satellite 2 or another satellite (not shown). The up-link signal is typically 6/14FHz. Various signal inputs such as video 26, audio 28 and data 30 can be transmitted to the up-link antenna 16.

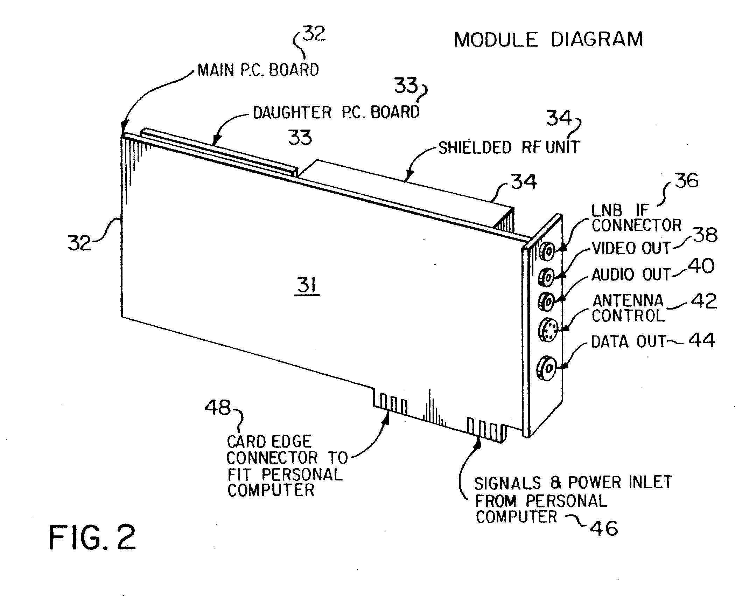

Referring to Figure 2, which illustrates a perspective detailed view of the receiver card 9 which is identified as receiver module 31, it can be seen that the receiver module 31 is constructed to have a main PC board 32, a daughter PC board 33, and a shielded RF unit 34. This receiver module 31 is sized so that it fits in an accessory slot of a computer. At one end of the receiver module 31, there is located an LNB IF (low noise block intermediate frequency) connector 36, a video outlet 38, an audio outlet 40, an antenna control outlet 42 and a data outlet 44. At the bottom of the module 31, there is located a card edge connector 48 which is capable of mating with a computer (computer 8 in Figure 1) and a signals and power inlet 46 which receives information and power from the computer (computer 8 in Figure 1).

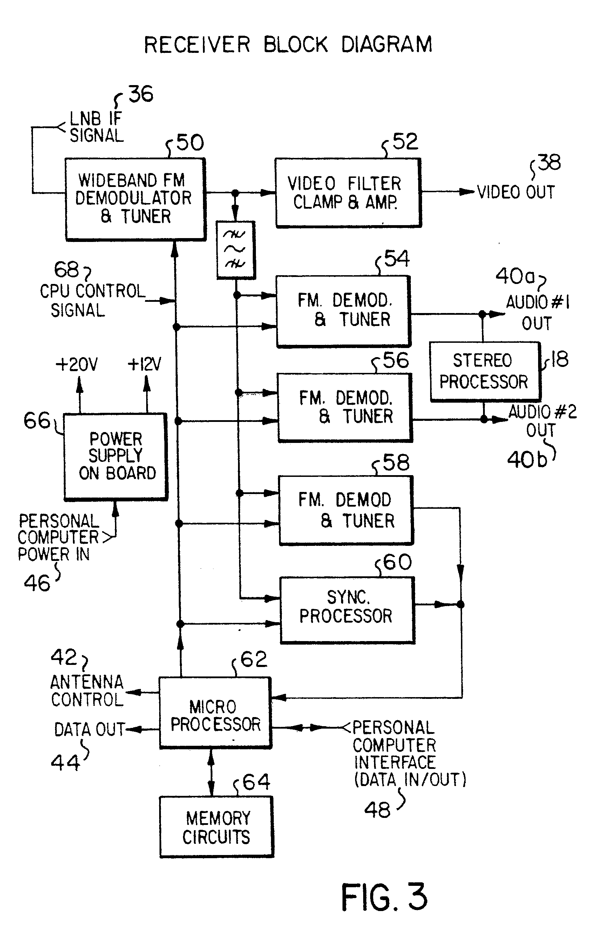

Referring to Figure 3, which depicts a block diagram of the circuitry of the receiver 31, it can be seen that the receiver system includes a number of basic systems or elements. The LNB IF signal 36 (from the low noise block converter 6 is shown in Figure 1) is fed into a wide band FM demodulator and tuner 50. The wide band FM demodulator and tuner 50 demodulates the IF signal into a baseband signal which is transmitted respectively to a video filter clamp and amplifier 52, an FM demodulator and tuner 54, a further FM demodulator and tuner 56, a further FM demodulator and tuner 58, and a synchronizing processor 60. Video filter clamp and amplifier 52 filters the video signal from the baseband signal, amplifies it and transmits it to outlet 38. Part of the wide band FM demodulated baseband signal is fed to the apir of demodulators and tuners i.e. FM demodulator and tuner 54 and FM demodulator and tuner 56. These two demodulators and tuners 54 and 56 demodulate and tune the FM signals into stereo, with the assistance of stereo processor 18 and convey the respective stereo signals to audio signal outlets 40a and 40b.

A further portion of the demodulated wide band FM signal is transmitted respectively to FM demodulator and tuner 58 and synchronizing processor 60. The signal from tuner 58 and processor 60 is combined and fed to on-board microprocessor 62. Microprocessor 62 is reversibly connected to memory circuits 64 for storing data. Data in and out from the computer (see computer 8 in Figure 1) are fed through interface 48 into on-board microprocessor 62. The on-board microprocessor 62 feeds data to data outlet 44 (see Figure 2). It also transmits an antenna control signal to antenna control outlet 44 (see Figure 2). The on-board microprocessor 62 is also connected to the three FM demodulators and tuners 54, 56 and 58, and synchronous processor 60 and can control these units as required. Microprocessor 62 is also connected to and can control wide band FM demodulator and tuner 50. Power from the computer (see computer 8 in Figure 1) 46 and is transmitted through power supply 66. A CPU control signal 68 from the computer 8 is also transmitted to wide band FM demodulator and tuner 50.

As will be apparent to those skilled in the art in the light of the foregoing disclosure, many alterations and modifications are possible in the practice of this invention without departing from the spirit or scope thereof. Accordingly, the scope of the invention is to be construed in accordance with the substance defined by the following claims.

## Claims

1. A satellite receiver module for receiving signals from a satellite using a computer for control of the signal, said receiver module being capable of being incorporated into the computer, comprising:
    (a) circuit means which is adapted to process said signals from the satellite and to cooperate with the computer; and,
    (b) means for enabling the circuit means to be powered by power received from the computer.

2. A receiver module as defined in claim 1 wherein the circuit means includes means for controlling the circuit means by signals received from the computer or from the satellite.

3. A receiver module as defined in claim 1 wherein the signal from the satellite is received by means of a reflector antenna.

4. A receiver module as defined in claim 3 wherein a signal from the reflector antenna is relayed through a low noise block converter and converted to an intermediate frequency signal before being transmitted to the circuit means.

5. A receiver module as defined in claim 4 wherein the circuit means includes an RF section for demodulating the intermediate frequency signal from the converter into a baseband signal.

6. A receiver module as defined in claim 5 including means wherein the baseband signal is segregated into video, audio and data signals.

7. A receiver module as defined in claim 6 wherein the circuit means includes means for controlling the position of the reflector antenna.

8. A receiver module as defined in claim 7 wherein the receiver includes on-board microprocessing means for processing data received from the computer or from the signal received from the satellite and for configuring the circuit means.

9. A receiver module as defined in claim 8 which includes output means respectively for each of said video, audio and data signals.

10. A receiver module as defined in claim 9 wherein a video output means includes means for driving a television monitor or recording equipment of said video signal.

11. A receiver module as defined in claim 9 wherein the audio output means includes means to drive an audio amplifier or recording equipment utilizing the audio signal received from the satellite.

12. A receiver module as defined in claim 9 wherein the data output means includes means to drive a printer, the computer or a data storage device utilizing the data signal received from the satellite.

13. A receiver module as defined in claim 9 including circuit means which can extract a signal from the video signal and utilize the extracted signal as a control signal.

14. A receiver module as defined in claim 8 wherein the micro-processing means includes a circuit for utilizing a signal extracted from the video signal, and data from a subcarrier transmission and use such signal and data as control signals, or relay them to the computer as data for processing.

15. A receiver module as defined in claim 14 including an on-board power supply which is adapted for modifying power from the computer so that it can be used by the receiver module.

0276932

FIG. 1

MODULE DIAGRAM

MAIN P.C. BOARD ⟨32

DAUGHTER P.C. BOARD 33⟩

33

34⟩

SHIELDED RF UNIT

34

36

32⌐

32

31

LNB IF CONNECTOR 38

VIDEO OUT⌐38

AUDIO OUT⌐40

ANTENNA CONTROL⌐42

DATA OUT⌐44

48⌐

CARD EDGE CONNECTOR TO FIT PERSONAL COMPUTER

SIGNALS & POWER INLET FROM PERSONAL COMPUTER ⌐46

FIG. 2

0276932

RECEIVER BLOCK DIAGRAM

FIG. 3